# EUROPEAN PATENT SPECIFICATION

(11) **EP 2 888 795 B1**
(45) Date of publication and mention of the grant of the patent: **06.01.2021**
(21) Application number: 13785607.6
(22) Date of filing: 20.08.2013
(51) Int. Cl.: H02J 3/14, H02J 13/00

(54) **ELECTRICAL HOUSEHOLD APPLIANCE SYSTEM**
ELEKTROHAUSHALTSGERÄTESYSTEM
SYSTÈME D'APPAREIL ÉLECTROMÉNAGER

(30) Priority: 21.08.2012 IT TO20120738
(43) Date of publication of application: 01.07.2015
(73) Proprietor: Whirlpool EMEA S.p.A., 20016 Pero (MI) (IT)
(72) Inventor: AISA, Valerio, I-60044 Fabriano (Ancona) (IT); FRATTESI, Stefano, I-60044 Fabriano (Ancona) (IT)
(74) Representative: Spina, Alessandro
(86) International application number: PCT/IB2013/056761
(87) International publication number: WO 2014/030121

(56) References cited:
- EP-A2- 1 465 320
- WO-A2-02/41585
- US-A1- 2005 099 314
- US-A1- 2011 264 286

## Description

### Field of the invention

The present invention relates to the field of communication systems for electrical appliances and has been developed with particular reference to systems aimed at managing domestic consumption of electrical energy.

### Prior art

The evolution of systems for generation and distribution of electrical energy, distinguished by an increasing use of information and communication technologies (ICTs), is increasingly bringing to the fore the appropriateness of having available at home electrical appliances that are able to negotiate their own consumption levels, through direct or mediated dialogue - i.e., via an appropriate energy manager - with the energy provider or utility. By means of this capacity for dialogue the consumption levels can be adapted to a certain extent to the requirements of the electrical grid, which vary dynamically in day-time and nighttime and are expressed, for the electric-power utility, in terms of need to reduce the consumption levels in peak periods and to dispose of over-production and, for the user, in terms of appropriateness of low-cost exploitation of the situations of over-production of electrical energy.

The aforesaid dialogue between the electric-power utility and the household electrical devices, which obviously presupposes that the parts are able to communicate, is encouraging manufacturers of electrical appliances to develop products provided with connectivity and, with reference above all to the case of the electrical household appliances, three different approaches are emerging:
a. use of a transceiver, commonly also designated by the term "communication node", installed on board the electrical household appliance;
b. provision of the electrical household appliance with an appropriate connector safely accessible from outside, to which there may be applied, when so desired by the user, an optional communication node;
c. use of external control devices or smart plugs, which, set between the supply cable of the electrical household appliance and the corresponding current socket, are able to interrupt supply of the electrical appliance upon direct request or request mediated by the utility.

In the first case (case a) there exists the problem of the cost of the communication node, which renders the corresponding products less competitive, and the problem of tying down the electrical appliance to a given communication technology that is liable to undergo over time frequent modifications and updates, which result in non-negligible maintenance costs that tend to put the brake on the development of electrical household appliances of a smart-grid-ready type, i.e., natively prearranged for interacting with the latest-generation electrical grids (smart grids). These problems have pushed manufacturers to seek compromise solutions that are able, on the one hand, to prevent excessive penalization of the industrial cost of the product and, on the other, to render it independent of a given communication technology. A known example of compromise solution is described, for instance, in WO 02/21664 A1 and in WO 02/21660 A1 (corresponding to US2005/099314 A), based upon which is the preamble of Claim 1. In this solution, an electrical household appliance communicates bidirectionally using the same electronics associated to its control system - hence not introducing additional costs - thanks to the aid of an appropriate external control device, set between the supply cable of the product and the corresponding current outlet. This method presents the advantage of proposing a mode of transmission of information from the electrical household appliance to the outside world that is extremely inexpensive and effective, but also presents the defect of requiring, at the level of external control device, a circuitry for transmission of information to the electrical household appliance that is somewhat complex, cumbersome, and costly.

More in particular, the communication described in the cited prior documents, called *"Power Modulation",* is strictly synchronized with the grid frequency and hence designed to send coded information within each grid period. Therefore, the coding of said information must be carried out within fixed periods that coincide with the grid period and, to this purpose, it requires the use of fast electronic components (such as triacs and mosfets), suitably driven by proper digital control systems, and cannot be carried out - for example - by means of simple electromechanical switches, which distinguish the low cost control systems of simple electrical appliances and of electrical household appliances of low- and medium-ranges.

WO 02/21660 hypothizes an implementation of data transmission on power line from the external device to the electrical household appliance that provides for the association of several bits to each half-wave of the mains voltage. In one such implementation, this can be obtained by imposing to each controlled interruption of the supply voltage of the electrical household appliance a variable duration, expressed as a multiple of a basic duration D0 (for example: D0=0,1 mSec), corresponding to the weight of the lightest bit (bit0=20*D0→0,1 mSec; bit1=21*D0→0,2 mSec; bit2=22*D0→0,4 mSec; bit3=23*D0→0,8 mSec). Also in this case the communication is strictly synchronized with the grid frequency, but the transmission speed can be noticeably increased with respect to the case of association of one bit to each half-wave, with voltage interruptions having a fixed duration.

In the second case (case b), the need to equip the electrical household appliance with an appropriate cavity, in which to allocate the optional communication node, introduces problems of de-standardization in the construction of the cabinet of the product, which results in an increase of its industrial cost and in a potential disturbance to its styling.

In the third case (case c), supply of the household electrical devices concerned would be managed through the aforesaid control device or smart plug by activating the electrical appliance when the grid has electric power in excess and deactivating it in the moments of shortage of the aforesaid power available in the grid. This management by the utility would obviously be regulated by an appropriate contract stipulated directly with the user. There exists, however, a serious problem that renders inadequate and unadvisable in the majority of cases the use of the aforesaid external control devices as ON-OFF managers of electrical household appliances, namely, the fact that ON-OFF management of supply of an electrical appliance may markedly jeopardize its performance, cause inefficiency, and at times even lead to damage to the product. For this reason, manufacturers of electrical household appliances and consumer organizations firmly oppose the use of external control devices that, according to the requirements of the electric-power utility, interrupt supply of an electric-power using household device regardless of the operating step in which the latter happens to be operating at that moment.

***Document*** US2005/0099314A1 discloses a system and a device for monitoring an electric user, wherein transmission of data to the electric user takes place by means of interruptions of the a.c. waveform of a variable length. Document EP1465320A2 discloses a method and a system for the automatic testing of electric equipment, wherein information's encoding to the electric equipment is made through a sequence of interruptions of the a.c. voltage of the electric equipment.

### Summary of the invention

In its general terms, the purpose of the present invention is to provide a communication mode between an electrical appliance and a corresponding control device that is simpler and less expensive than what is envisaged by the known technique as discussed above. In the aforesaid general field, a particular aim of the present invention is to provide electrical appliances, as well as control devices and methods use of which is particularly advantageous in systems based upon the approach of the first case described previously (case a), that are aimed at management of consumption of electrical energy in a domestic environment.

The above and further purposes still, which will emerge more clearly hereinafter, are achieved, according to the present invention, by an electrical-household-appliance system, a method for controlling consumption of electrical energy in a domestic environment, an electrical appliance and a control device for an electrical household appliance system that present the characteristics specified in the annexed claims. The claims form an integral part of the technical teaching provided herein in relation to the invention.

In brief, the invention envisages an electrical appliance (100) and a corresponding external control device or smart plug (160, 191) distinguished by the capacity for communicating unidirectionally or bidirectionally through the supply cable (150, 151) of the power-using device itself.

In a preferred embodiment, the control device (160, 191) sends the information - for example, of request for collaboration by the electrical grid - through a short sequence of brief interruptions of fixed duration, defined hereinafter also as "short power interruptions", of the a.c. mains voltage that supplies the electrical appliance (100), where said interruptions are separated by a respective period or interval of variable duration, in the course of which the electrical appliance is regularly supplied. The aforesaid periods or intervals may contain in coded form the transmitted information, and the aforesaid short power interruptions have a duration such as not to cause any disturbance to proper operation of the control electronics of the electrical appliance itself. The information that the control device (160) can supply regards, for example, situations of the electrical grid that require collaboration by the electrical appliance (100) itself, and the latter, in response, may modify its own operating cycle, seeking to meet the requirements of that given moment of the electrical grid while respecting the constraints proper to the operating step where the electrical appliance happens to be operating. The electrical appliance (100), in turn, in a preferred embodiment, may furnish a reply to the control device (160) indicating, for example, the possible modifications that it can make to its own operating cycle to seek to meet the requirements of the electrical grid while respecting the constraints proper to the current operating step. The communication methodology adopted preferentially uses the same control electronics already provided on household electrical appliances of a common type, i.e., without adding any specific hardware component, and enables the electrical appliance to send a first information, regarding the type of intervention on the operating cycle that it can effect on the basis of the current operating step, without minimally altering the industrial cost of the product itself.

In a preferred embodiment, the technique of transmission of information from the electrical appliance to the control device is based upon the fact that the digital control system (110) of an electrical household appliance (100) is typically provided with means (115, 120, 125) for managing the flows of the grid current that supplies its internal electrical loads (130) connected between live (140) and neutral (145) through corresponding controlled switches (125) - represented by solenoid valves, pumps, motors, lamps, fans, and so forth - and consists in exploiting this characteristic for transmitting, through its own supply cable (150), first information representing the type of intervention decided upon in relation to the request received by the control device. The aforesaid information is transmitted by means of controlled and appropriately encoded variations of the aforesaid current flows and is acquired in reception, decoded and possibly put on a network through the aid of the control device (160) set between a source of supply the electrical household appliance, such as a current socket (190) of the domestic environment, to which the electrical household appliance itself is connected by means of a supply line of its own, such as its supply cable (150) with the corresponding plug (151).

The control device (160) is provided with means (170, 171) for creating the aforesaid brief sequences of short power interruptions to the electrical household appliance (100). In the preferred embodiment, the control device (160) moreover includes means (165, 166, 167) for measuring the variations of the grid current that supplies the electrical household appliance, and means (170) for decoding the information encoded through the aforesaid variations of current made by the electrical household appliance. In one embodiment, the control device (160) likewise comprises means (175) for receiving information to be sent to the electrical household appliance (100) and for communicating information on a local communication network (180) to which the control device (160) is connected, the latter information regarding, for example, operating decisions taken by the electrical household appliance (100) itself in response to the requests of the control device (160).

In one embodiment, the information sent by the electrical household appliance (100) in response to the requests of the control device (160) represents a feedback for a domestic energy manager (185), which, in the presence of the aforesaid information, can update its control strategy. The response information may be positive (full acceptance of the request), a compromise (partial acceptance of the request, i.e., partial variation of power-consumption levels), and negative (non-acceptance of the request).

The control device (160), in addition to being able to receive from the electrical household appliance (100) feedback information on the requests made, may also receive therefrom, via the same technique, other types of information, such as for example the type of electrical household appliance (refrigerator, fridge-freezer, dish-washer, washing machine, dryer, oven, cooking hob, suction hood, and so forth), its own operating state, the events of interaction with the user, the statistical data on the frequency and mode of use, and the diagnostic data generated by a possible system of self-diagnosis present within the control system itself of the electrical household appliance, as described in greater detail hereinafter. Likewise, since the external control device is able to acquire and decode the aforesaid different types of information sent by the electrical household appliance connected thereto, it performs the role of enabler in regard to provision of new services based upon the contents of these different types of information.

The communication system provided according to the aforesaid embodiment of the invention differs sharply from communication systems on known powerlines, because it does not require any specific transmission device, but uses the same electronic means already present both on the electrical household appliance and on the control device, and consequently does not entail additional costs on the aforesaid devices. As compared to a known powerline-based communication system, the system proposed in the framework of the present invention is hence distinguished by a simpler and more elementary technology, which, however, presents the advantage of meeting fully the requirements of the applications at which it is aimed and of not weighing upon the cost either of the electrical household appliance or of the control device.

### Brief description of the drawings

Further purposes, characteristics, and advantages of the invention will emerge clearly from the ensuing detailed description, with reference to the attached drawings, which are provided purely by way of non-limiting example and in which:
- Figure 1a illustrates the general architecture of the system according to one embodiment of the invention, wherein a control device external to an electrical household appliance (100) is a movable device (160) set between the supply cable (150) of the electrical household appliance itself and the corresponding current outlet (190);
- Figure 1b illustrates the general architecture of the system according to another embodiment of the invention, where the function performed by the control device (160) of Figure 1a is integrated within the current socket (191), which supplies the electrical household appliance;
- Figure 2 is a schematic illustration of the known control system of an electrical household appliance (100), highlighted in which is the mode of management of a generic electrical load (130);
- Figure 3a is a block diagram of the control device (160) of Figure 1a;
- Figure 3b is the block diagram of the current outlet (191) of Figure 1b, englobing the function performed by the control device (160) of Figure 1a;
- Figure 3c illustrates a mode of transmission of information from the control device (160 or 191) to the electrical household appliance (100) according to a preferred embodiment of the invention;
- Figure 3d illustrates in detail a portion, on an expanded time scale, of the mode of transmission described in Figure 3c according to a preferred embodiment of the invention;
- Figure 4 illustrates a flowchart that represents the process of management of domestic energy consumption according to one embodiment of the invention;
- Figure 5 represents an example of data transmission from the electrical household appliance to the control device 160 or 191 according to one embodiment of the invention; and
- Figure 6 illustrates a flowchart of the routine of reception, by the device 160 or 191, of the data sent by the electrical household appliance in the form of current absorptions, according to one embodiment of the invention.

### Description of preferred embodiments of the invention

Illustrated in the ensuing description are various specific details aimed at an in-depth understanding of the embodiments. The embodiments may be obtained without one or more of the specific details or with other methods. In other cases, known structures or operations are not illustrated or described in detail so that various aspects of the embodiments will not be obscured. The reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" and the like that may be present in various points of the present description do not necessarily refer to one and the same embodiment. Moreover, particular conformations, structures, or characteristics may be combined in any suitable way in one or more embodiments, which may even differ from the ones described. The references used herein are provided merely for convenience and hence do not define the sphere of protection or the scope of the embodiments.

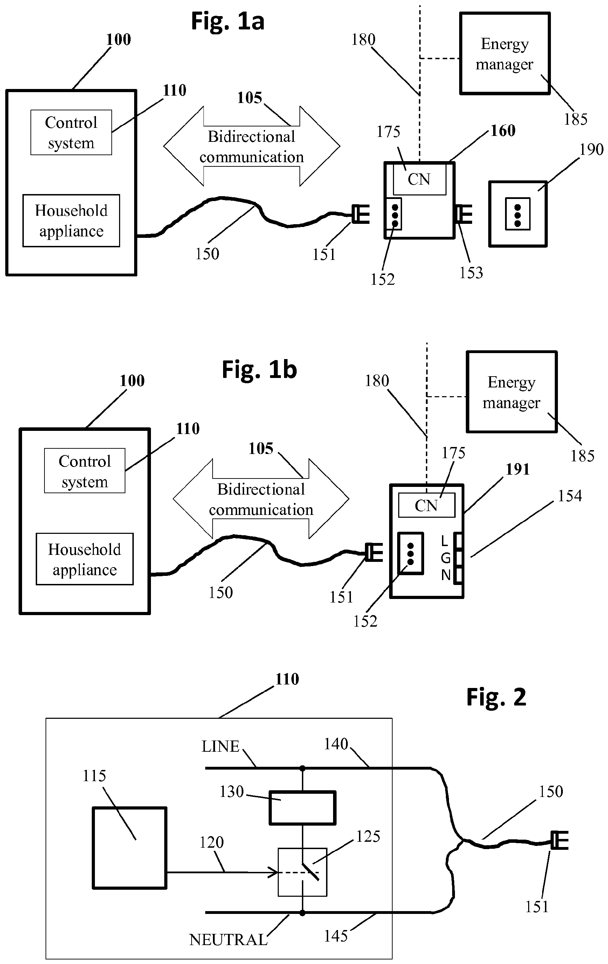

Represented schematically in Figure 1a is an electrical household appliance system according to one embodiment of the invention, comprising an electrical appliance, here represented by a generic electrical household appliance 100, provided with a digital control system 110, and a control device 160, also defined hereinafter as "smart plug", here set between the supply cable 150 of the electrical household appliance and the corresponding current socket 190. The control device 160 is provided with a current socket 152 or the like, to be connected to which is the plug 151 of the supply cable of the electrical household appliance, or in any case the cable itself, and likewise has a plug 153 for connecting up in turn to the current socket 190. The control device 160 is moreover provided with interfacing means, here represented by a communication node 175, through which it can connect up to a communication network 180, in particular a local network. Also possibly connected to the local network 180 is an energy-manager device 185, of any known type, which performs the function of domestic energy manager.

Highlighted in the same Figure 1a is the bidirectional flow of information 105 that, in a preferred, but non-exclusive, embodiment of the invention, is exchanged between the electrical household appliance 100 and the control device 160. As will emerge more clearly hereinafter, the information from the electrical household appliance 100 to the device 160 is encoded in the form of pulses of current absorption that the control device 160 is able to measure and decode, whereas the information from the device 160 to the electrical household appliance 100 is encoded by the former by carrying out a modulation, via short power interruptions appropriately spaced apart, of the current or electric power supplied to the latter, a modulation that the latter is able to decode.

Preferably, the information in question regards requests for modifying power absorption made by the control device 160 to the electrical household appliance 100 and, in response, the feedback of the control system 110 of the electrical household appliance, describing the actions of modification of power absorption that the latter is able to effect while respecting the constraints imposed by its current operating step.

In a different embodiment of the invention, where the functions performed by the device 160 of Figure 1a are integrated within a current socket 191, is represented in Figure 1b. The current socket 191 is connected to the supply source, here represented by the electrical system of the environment where it is located, through a connector 154 and is able, according to one embodiment of the invention, to measure consumption of electric power of the electrical household appliance 100 connected thereto, to detect the pulses of current absorption sent in coded form by the control system 110 of the electrical household-appliance 100 itself, to decode the corresponding information, and possibly to share the aforesaid information with other devices through the local network 180 to which it is connected, preferably by means of the same interface represented by the communication node 175.

The control system 110 of the electrical household appliance, represented in Figure 2, sends information to the control device 160 or to the current socket 191 exploiting, according to a preferred embodiment of the invention, the fact that the individual electrical loads of the electrical household appliance 100 - one of which is designated by 130 - are managed through corresponding controllable switch means 125, which, on the basis of the control signal 120 managed by an actuator circuit 115 of the control system 110, receive or not the grid a.c. supply. In particular, and with reference to the schematic example represented, closing of the switch 125 causes across the electrical load 130 application of a single-phase mains voltage associated to the conductors 140 (Live) and 145 (Neutral) and consequently causes the aforesaid electrical load 130 to absorb current.

Encoded transmission of information by the electrical household appliance is obtained, according to a preferred embodiment of the invention, by acting in ON-OFF mode on the switch 125, which can be represented by the contact of an electromechanical relay or else by a triac (i.e., a solid-state relay) so as to cause passage or otherwise of current on the electrical load 130 in the closed state or open state, respectively, of the contact of the switch 125: the aforesaid sequences of ON and OFF activations are acquired and decoded by an external device of the type 160 or 191.

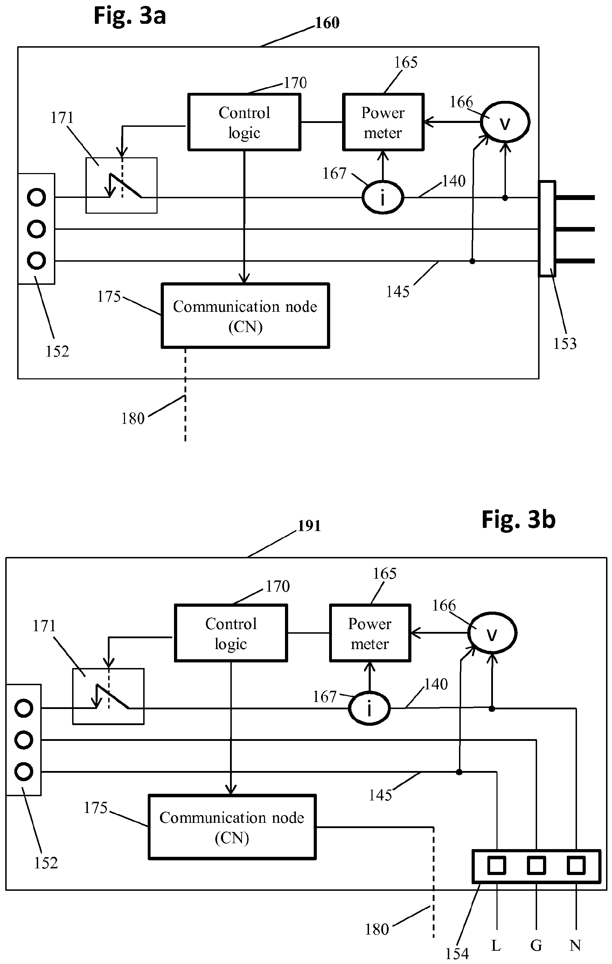

The devices 160 and 191, represented as a whole in Figures 3a and 3b respectively, have available identical means for measuring the current absorptions of the corresponding electrical household appliance, which here comprise a power meter 165, assisted by a voltage sensor 166 and a current sensor 167. The devices 160 and 191 have the same control logic 170 for managing the closed or open state of the contact of a controllable switch 171, preferably a relay, have a similar current socket 152 or other connector to which to connect the supply cable 150-151 of the electrical household appliance and interface in the same way (use of a communication node 175) with a local network 180. What differentiates the two devices is just the fact that the former one, i.e., the control device 160, has means 153 (such as a three-pin power plug) for connecting up to a standard current socket, whereas the latter, i.e., the smart outlet 191, is provided with terminals or the like for connection to a standard domestic electrical wiring system or of a proprietary type, i.e., the voltage source: in this perspective, the device 191 can be considered as an advanced current socket. In both cases, the communication node 175 may be based upon radio frequency (for example: WiFi, ZigBee, Z-Wave, etc.) or else on powerline (KNX, LonTalk, Homeplug, etc.), whilst, only in the case of the device 191, it may interface directly with a bus system on electrical cable, either of the standard type or of a proprietary type.

Encoded transmission of information by the control device 160 or 191 is obtained, according to a preferred embodiment of the invention, by acting in ON-OFF mode on the switch 171, which may advantageously be represented also by the contact of an electromechanical relay, so as to provide a short sequence of brief interruptions of fixed duration, or "short power interruptions", of the a.c. mains voltage that supplies the electrical appliance 100, interspersed or separated by periods or intervals of supply of variable duration, where the aforesaid periods or intervals may contain the transmitted information in coded form, and the interruptions are of a duration such as not to cause any disturbance to proper operation of the control electronics 110 of the electrical appliance itself.

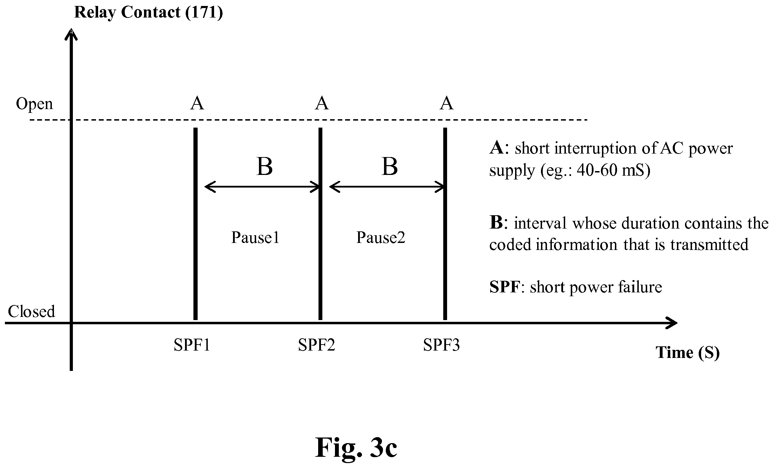

Figure 3c represents the aforesaid ON/OFF communication, performed by the control device 160 or 191 through the switch 171 according to a preferred embodiment of the invention. A first brief interruption SPF1 of the supply voltage of the electrical household appliance 100 - having a duration "A" of a value comprised in a given range that will not produce any disturbance to the control system 110 of the electrical household appliance 100 - performs the function of start of transmission or header. The aforesaid first brief interruption is then followed by the interval "Pause 1", where the electrical household appliance is supplied regularly, the duration "B" of which is associated, in appropriately encoded form, to the information to be transmitted. This is followed by a second "short power interruption" SPF2, having the same duration "A" as the previous one, which functions as delimiter of end of the first interval "Pause1" and of start of a second interval "Pause2", having the same duration "B" as the previous one and the end of which is delimited by a third and last short power interruption SPF3 of the same duration "A" as the previous ones.

The duration "A" of the short power interruptions is brief, i.e., such that the low-voltage d.c. supply made available to the control system 110 of the electrical household appliance does not undergo any perturbation. For example, the aforesaid duration "A" may be comprised between 40 and 60 ms, which represents a time interval which can be managed also with an electromechanical relay and which is such that the corresponding "short power interruption" does not cause perturbations to the control system of the electrical household appliance. The interval "Pause2", the duration of which deliberately coincides preferentially with that of the first interval "Pause1", determines the end of the transmission.

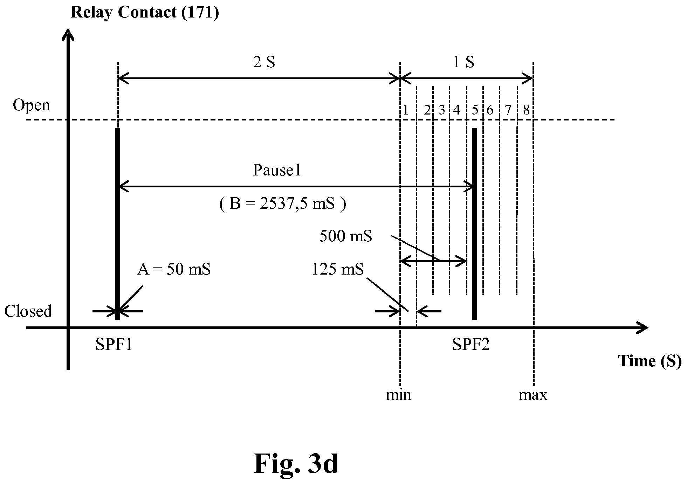

Figure 3d shows, on an expanded time scale, the part of Figure 3c regarding the interval "Pause1" and highlights the modality of encoding, according to a preferred application of the invention, of the information transmitted by the control device 160 or 191.

In particular, Figure 3d hypothesizes, purely by way of non-limiting example, a duration of the interval "Pause1" comprised between a minimum of 2s (2000 ms) and a maximum of 3s (3000 ms), where the conclusive fraction of the interval "Pause1" - fraction here assumed as being of 1 s - is divided into a plurality of sub-intervals (slots) of the same duration - here assumed as being 8 time slots of 125 ms each - corresponding to as many types of information (requests, commands, other types of information) to be transmitted; in the case in point, the short power failure SPF2 (the duration of which is assumed as being B = 50 ms), which delimits the end of the interval associated to "Pause1", falls within slot No. 5, where the duration B of "Pause1" is 2537.5 ms (in fact B = 2000 ms + 4 · 125 ms + 37.5 ms = 1527.5 ms, 37.5 ms being the interval between the start of slot No. 5 and the start of the short power failure SPF2, the latter assumed, as has already been said, as having a duration A = 50 ms and as being centred within slot No. 5 itself).

It is evident that the same representation of Figure 3d will, according to the invention, be used by the control system 110 of the electrical household appliance 100 for decoding the type of information (from among the eight possible types assumed in the example represented) identified by the duration of the time interval that elapses between the short power failures SPF1 and SPF2, which is validated by the subsequent identical measurement of the interval comprised between SPF2 and SPF3. The aforesaid durations are determined by the control system 110 of the electrical household appliance 100 through the measurement of the time interval that elapses between two successive zero-crossings of the a.c. mains voltage, the aforesaid zero-crossings of the mains voltage being provided by the zero-crossing signal, which is typically used, according to the prior art, by digital control systems of electrical household appliances for synchronising activation via triac of their electrical loads or for other similar purposes.

There are multiple possibilities of encoding information through actions of the ON/OFF type, performed by the control device 160 or 191 through brief interruptions of the mains voltage, without thereby departing from the scope of the present invention. Likewise, there are multiple possibilities of encoding information once again through actions of the ON/OFF type, performed by the control system 110 of an electrical household appliance 100, on an electrical load 130 belonging to the electrical household appliance itself, without thereby departing from the scope of the present invention.

As regards the latter aspect regarding the data transmission by the electrical household appliance, encoding may be associated to a sequence of actions of closing and opening of the switch 125 associated to periods of fixed duration, which correspond, respectively, to a logic "zero" (switch open during the aforesaid fixed period) or a logic "one" (switch closed during the aforesaid fixed period), such as, for example, is the case where the switch 125 is represented by a triac and the fixed duration of the opening and closing times coincides with the grid period, namely, 20 ms or 16.67 ms if the grid frequency is 50 Hz or 60 Hz, respectively. A known example of this type of transmission is described, for example, in the international patent application WO 02/21664 cited previously, the teachings of which in this regard are incorporated herein.

In a particularly advantageous embodiment, which advantageously also includes the case where the switch 125 is represented by the contact of a common electromechanical relay, the system for encoding the information sent by the electrical household appliance 100 is represented by a sequence of operations of closing and opening of the contact 125 associated to periods of variable duration, the useful information being contained in the duration of the aforesaid periods. The aforesaid encoding mode may be implemented to extreme advantage in all those cases where the electrical household appliance does not have an advanced control system, i.e., one that includes means necessary for implementing the communication technique described in the aforementioned WO 02/21664 and WO 02/21660, which presuppose a high precision of measurement, for example of time (in terms of microseconds).

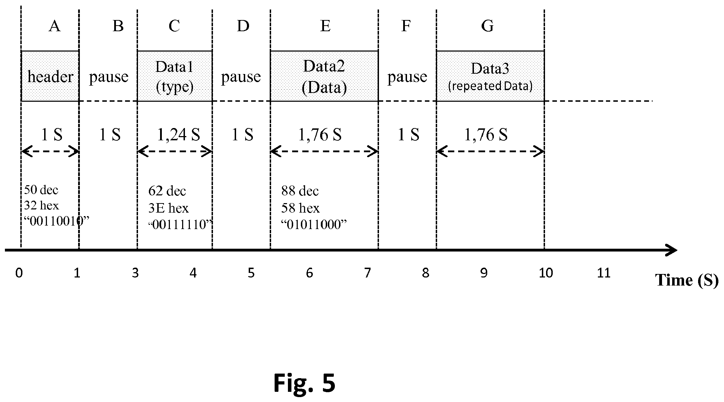

The modalities of encoding of the data sent by the electrical household appliance 100, which are, as has been said, based upon the duration of the ON and OFF pulses applied to the electrical load 130, may be multiple. A possible implementation of data encoding, employed in the aforesaid particularly advantageous embodiment, is illustrated in Figure 5, which represents a sequence of pulses of variable duration (this duration depending upon the value of the datum associated to each period) associated to the passage of current on the load 130 (corresponding to closing of the contact 125), interspersed by fixed pauses associated to opening of the contact 125. In particular, the first datum of start of transmission (header) is represented by a pulse of current - deriving from application of the mains voltage across the load 130 through closing of the contact 125 - of a duration of 1 s, corresponding to 50 grid cycles with a period of 20 ms (grid frequency of 50 Hz), which is followed, after a fixed pause of 1 s, by Data1, which indicates the type of datum (*type*) that will follow and that has been assumed as corresponding to the decimal number 62 ("3E" in hexadecimal format and "00111110" in binary format) and hence of a duration of 62 x 20·10⁻³ = 1.24 s. After another pause of 1 s there follows Data2, which represents the useful datum to be transmitted, which, in the example considered, is 88 in decimal format ("58" in hexadecimal format and "01011000" in binary format), i.e., with a duration of 88 x 20·10⁻³ = 1.76 s. This is followed, after a further pause of 1 s, by Data3, which replicates Data2 and concludes the transmission.

In general terms, then, the variable duration of the pulses depends upon the value of the datum to be transmitted and is preferentially a multiple - not necessarily an integer multiple - of the grid period. Previously, there has been exemplified an implementation in relation to a grid frequency of 50 Hz, but it is evident that the same concept may be applied also to the case of some other grid frequencies, typically 60 Hz. The variable duration of the above pulses can be measured by multiples of the grip period for mere practical reasons. However, as an alternative, the variable duration of the pulses associated to Data1, Data2 e Data3 can be easily defined by using one of the internal timers of the micro-controller of the control system of the electrical appliance, which timers are notoriously provided with a good precision due to their dependence from the oscillations of the quartz or ceramic oscillator that determines the clock of the same micro-controller.

The meaning of Data1, Data2 and Data3 may be obtained using their respective value as pointer to an element of a corresponding table, which is common both to the electrical household appliance 100 and to the external control device 160 or 191, and the contents of which represent, for the electrical household appliance, the datum sent to the external control device in coded form through appropriate power-absorption sequences and, for the external control device, decoding of the value received.

Data1 serves, as has been said, to define the type of information or datum that is sent; for example, in one embodiment, Data1 may regard:
Case a. information regarding the response (*feedback*) of the electrical household appliance 100 to a request for modifying its power absorption by the control device 160 or 191; the aforesaid response describes the modifications to its own power consumption that the control system 110 of the electrical household appliance 100 is effectively able to implement while respecting the constraints proper to its current operating step;
**Case b.** information regarding the current operating status (*status*) of the electrical household appliance, useful for example for informing the user on the state of advance of a given program (washing program, if it is a washing machine or a dish-washer, or else cooking program, etc.) through the communication means of a home-automation system connected to the local network 180 that sees the electrical household appliance itself as a peripheral device associated to its system;
Case c. information regarding an interaction event (*event*) with the electrical household appliance by the user, the aforesaid information being useful, for example, in the case where a telemedicine system that uses the electrical household appliances as source of information on the daily behaviour of an infirm user who needs assistance is connected to the local network 180;
**Case d.** a statistical datum (*statistic*) regarding the work cycles performed by the electrical household appliance or other information deemed useful by the manufacturer of the electrical household appliance itself;
**Case e**. a diagnostic code (*diagnostic*) processed by the system of self-diagnosis of the electrical household appliance, useful for remote assistance of the product;
**Case f.** the type of the electrical household appliance (*type*)*,* which is connected to the external device 160 or 191 (smart plug).

With reference to Case a (*feedback*)*,* the control system 110 of the electrical household appliance 100, once the communication has been received by the control device 160 or 191 and the type of information received has been decoded (which, purely by way of non-limiting example that falls within the preferential field of application of the present invention, is assumed as regarding a request for modifying the power absorbed by the electrical household appliance), sends as feedback to the control device information regarding the operating decisions taken while respecting the constraints proper to the operating step that the electrical household appliance is performing at that moment. The aforesaid operating decisions taken by the electrical household appliance represent a feedback for the domestic energy manager (185), which, in the presence of the aforesaid information, will update its control strategy; this information may be positive (full acceptance of the request), a compromise (partial acceptance of the request, i.e., partial variation of power consumption), and negative (non-acceptance of the request).

The request for modifying the power-absorption levels, made to the electrical household appliance 100 by the energy manager 185 through the control device 160 or 191, may regard either a reduction of the absorption, which represents the most frequent case in which it is necessary to avoid the peaks of consumption of electricity, or, vice versa, an invitation to increase the consumption itself, there being present in the latter case a situation of overproduction of electrical energy that the utility intends to dispose of, reducing dynamically, for example, the cost thereof. Both cases fall within the spheres of application of the present invention, even though, in a preferential embodiment, reference is prevalently made to the first of these, associated to situations where the electrical grid is unable to meet fully the requests for power by power-using devices.

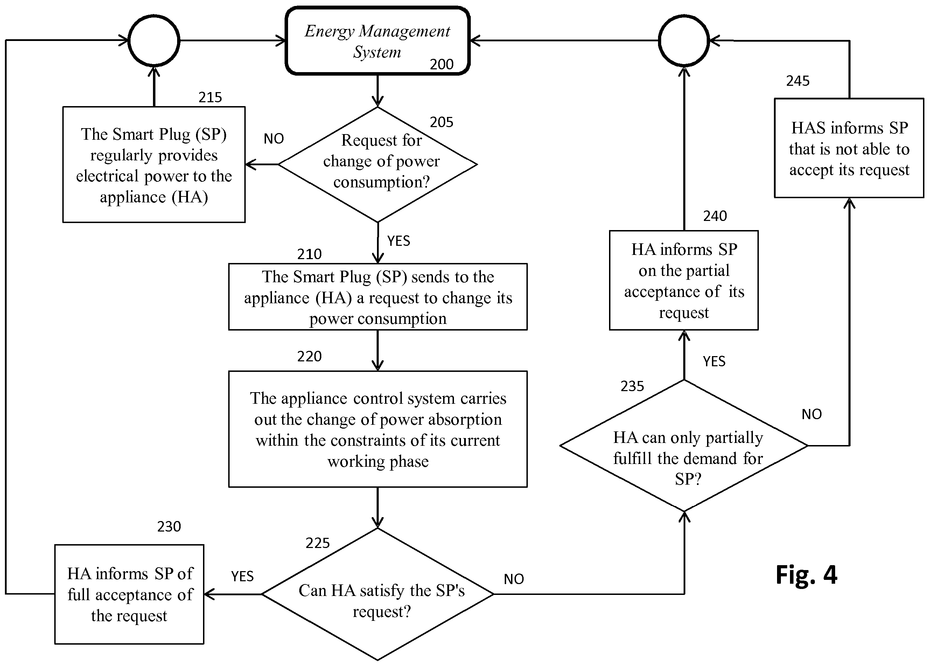

On the basis of the criteria just described, the behaviour of the electrical household appliance 100 and of the corresponding device 160 or 191, in response to the possible requests of an energy-management system, is represented by the flowchart of Figure 4, where the starting block 200 yields control to the testing block 205, which verifies the presence or otherwise of a request, by the energy manager 185, for modifying power absorption of the electrical household appliance 100, designated in the flowchart also by HA. If there is no request in progress for variation of the power consumption, control passes to block 215, which reasserts regular delivery of the mains supply to the electrical household appliance, and returns to the initial block 200; otherwise, the control device 160 or 191, referred to in the flowchart of Figure 4 by the term "smart plug" or SP, sends to the electrical household appliance a formal request for modification (reduction or increase, depending upon the operating situation of the electrical grid) of its own power absorption, and control passes to block 220, where the control system of the electrical household appliance verifies the possibility or otherwise of satisfying the request, according to the constraints imposed by its current operating step, and control passes to the testing block 225, which verifies the possibility or otherwise of complete satisfaction of the request by the electrical household appliance. If it is possible, the electrical household appliance sends to the smart plug a feedback of full acceptance of the request, and control returns to the initial block 200; otherwise, control passes to the testing block 225, which verifies whether the electrical household appliance can meet at least partially the request for modifying its own power absorption. If it is possible, the electrical household appliance supplies to the smart plug a feedback, where it describes the type of modification of the power absorption that it is able to effect and that it is rendering operative, and control returns to the initial block 200; otherwise, the electrical household appliance communicates to the smart plug its impossibility to accept the request coming from the home energy manager, and control returns once again to the initial block 200.

With reference to Case b (*status*), the electrical household appliance notifies its operating state, which may, for example, be the step of advance of a washing program or cooking program, or the like, depending upon the type of electrical household appliance. The aforesaid information is updated, in a preferred embodiment, at each change of status by the electrical household appliance. The information on status is very useful, above all when the electrical household appliance forms part of a home automation system in so far as it enables the aforesaid system to keep the user informed, through the interaction means that it has available (for example, a display device interfaced with the network 180), as regards the state of advance of a given program associated to the electrical household appliance itself (of particular interest, for example, is the state of "end of program", which warns the user that cooking is through and lunch is ready, or else that washing is completed and it is possible to iron the garments that have just been washed). In this case, the duration of the pulse (Data2) represents in coded form the new status assumed by the electrical household appliance.

With reference to Case c (*event*), the electrical household appliance notifies the occurrence of an interaction event with the user (for example, opening of the door of the refrigerator, activation of a washing program, activation of a cooking program, and so forth). This type of information is particularly useful if the electrical household appliance is used also as "vitality sensor" in the context of a telemedicine system: in this case, in fact, it can supply indications on the daily behaviour of an infirm user (for example, an elderly person suffering from Alzheimer's disease), contributing to the study of his or her behavioural habits and to the identification of possible anomalous behaviour that may point to worsening of a disease or the sign of an incipient disease. In this case, the duration of the pulse (Data2) expresses the type of event that has occurred.

With reference to Case d (*statistic*), the electrical household appliance supplies indications, for example on the type of program in progress; this may be useful to the manufacturer as statistical datum that provides information on the frequency and modalities of use of the product, this information being useful for carrying out possible modifications to improve the product and also to improve assistance thereof: thanks to this information, it is possible, in fact, to estimate the "state of wear" of the electrical household appliance and, if necessary, to intervene with operations of preventive maintenance. In this case, the duration of the pulse (Data2) identifies the type of the current program executed by the electrical household appliance.

With reference to Case e (*diagnostic*), the electrical household appliance sends a possible fault code or warning code, detected by its internal self-diagnosis system. The fault code identifies a specific failure that requires immediate intervention of technical assistance, whereas the warning code signals a less serious problem, which does not cause interruption of the service offered by the product, but may degrade performance thereof. This is all very useful for providing the user with a good service of remote assistance. In this case, the duration of the pulse (Data2) is associated to the code that identifies the diagnostic event (fault or warning) detected.

Finally, with reference to Case f (*type*), the electrical household appliance communicates its identity (refrigerator, fridge-freezer, dish-washer, washing machine, dryer, oven, cooking hob, suction hood, and so forth) so that the device 160 or 191 can interpret correctly all the information that this will send to it. The aforesaid operation may, for example, be carried out at each power-on operation of the electrical household appliance. In this case, the duration of the pulse (Data2) is associated to the code that identifies the type of the electrical household appliance.

To return once again to the example of Figure 5, the useful datum expressed by Data2 is associated to a pulse of current of a duration of 1.76 s, corresponding to 88 grid cycles ("58" in hexadecimal format, "01011000" in binary format), and expresses a given value, the meaning of which depends upon the encoding rules adopted and upon the meaning of Data1 (type of information transmitted). Finally, the duration of the last pulse (Data3) coincides deliberately with that of the preceding pulse (Data2) and represents a way for verifying proper reception of the latter and also for signalling the end of transmission.

The advantages of the example of application of the invention as compared to a smart-plug system of a traditional type are evident. Assume the case where:
- the electrical household appliance is represented by a washing machine that is carrying out a washing cycle at 60°C;
- forced interruption of supply must occur in the proximity of conclusion of a step of heating of the washing water, for example when the temperature of the water has reached 59°C; and
- the aforesaid interruption must persist for such a time that the temperature itself drops to 40°C.

In a traditional system, the electrical supply to the machine would simply be interrupted and, upon reactivation of the supply, the control system of the machine would have to recover the 19°C lost, by re-activating the heating resistance to reach the target value of 60°C. There follows an evident inefficiency, due to the need to heat the washing water once again, in addition to a prolongation of the duration of the washing cycle itself caused by the time required by the new heating operation. The user is consequently put at a disadvantage, whereas the utility will, instead, have obtained the dual advantage of reducing power consumption in a peak period and of billing the user for a larger amount of electrical energy.

In the system according to the invention, instead, it is the machine itself that, in response to a request for reduction of the power absorption by the control device 160 or 191 - which in turn forwards a request made by the energy manager 185 - carries out deactivation of the water-heating resistance (which typically absorbs a power of 2 kW), but continues the washing operation, which is characterized just by rotation back and forth of the drum, which involves a power absorption ten times lower than what is required during the preceding heating step, thus satisfying completely the request of the energy manager 185.

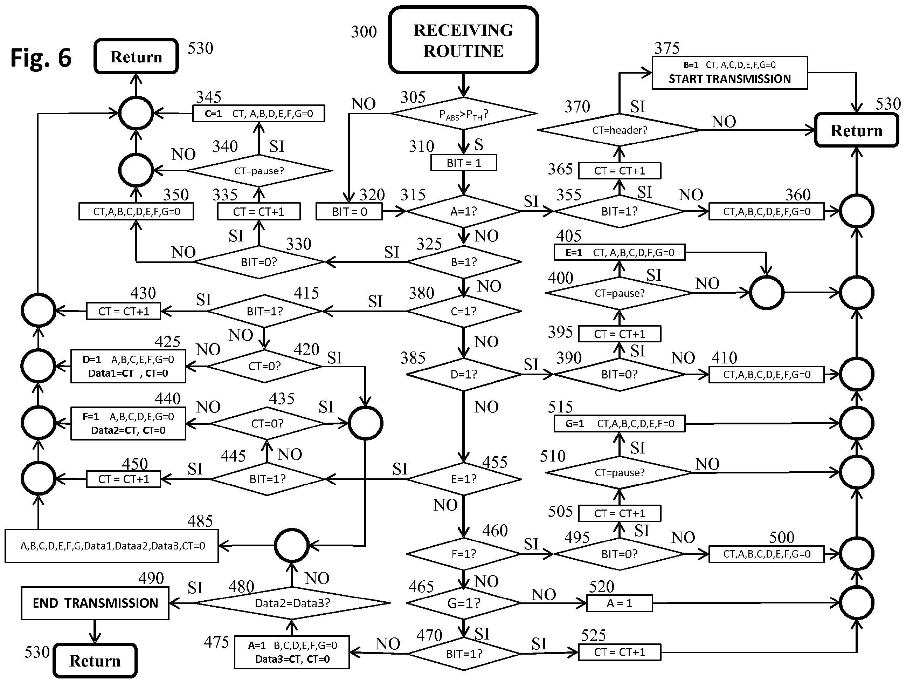

Represented in Figure 6 is a flowchart of a non-limiting example of routine of reception, by the device 160 or 191, of the data transmitted by the electrical household appliance in the form of current absorptions, according to an embodiment of the invention. The aforesaid routine uses variables, here designated by A, B, C, D, E, F, and G, referred to as "step variables" since they are associated to the various steps of a transmission represented in Figure 5, and assigns the value 1 (blocks 475 and 520 for the variable A, block 375 for the variable B, block 345 for the variable C, block 425 for the variable D, block 405 for the variable E, block 440 for the variable F, and block 515 for the variable G) to the variable corresponding to the current transmission step according to the diagram of Figure 5, all the other variables being set at zero.

The routine is called by the control system of the device 160 or 191 at fixed time intervals, for example coinciding with the grid period (20 ms in the case of a frequency of 50 Hz, as represented in Figure 5), and the measurement of the duration of the individual transmission steps is obtained by adding - using the counter CT (blocks 365, 335, 430, 395, 450, 505 and 525, corresponding, respectively, to steps A, B, C, D, E, F, and G) - the grid period associated to each call of the routine. The first operation performed by the device 160 or 191 on the occasion of each call of the reception routine consists in comparing the power P_{ABS} absorbed by the electrical household appliance in that grid period with a given power threshold P_{TH} assumed as reference. On the basis of the result of the comparison, the variable BIT is set at 1 if P_{ABS} > P_{TH} or else at zero otherwise (blocks 305, 310, 315, 320) and then control passes to identifying the current transmission step (testing blocks 315, 325, 380, 385, 455, 460 and 465), distinguished by the value 1 of the step variable where operations consistent with the value assumed by the aforesaid variable BIT are performed (testing blocks 335, 330, 415, 390, 445, 495 and 470). In particular, the sync signal "header" of start of transmission by the electrical household appliance (step A) is recognized by blocks 355-365-370-375, the duration of the first fixed pause (step B) is verified by blocks 330-335-340-345, the duration of Data1 (step C) is identified by blocks 415-420-425, the duration of the second fixed pause (step D) is verified by blocks 390-395-400-405, the duration of Data2 (step E) is identified by blocks 445-435-440, the duration of the third fixed pause (step F) is verified by blocks 495-505-510-515, and finally the duration of Data3 (step G) is identified by blocks 470-475. If the value of Data3 coincides with the value of Data2 (testing block 480), the transmission concludes positively, and the data received are contained in the variables Data1 and Data2; in all the other situations, no datum is received by the device 160 or 191, and the variables involved are set to zero (blocks 360, 350, 485, 410 and 500).

In practice, in the application exemplified herein, the device 160 or 191 performs the following functions:
- it communicates data or information to the electrical household appliance, such as commands or requests, in particular requests for modifying its absorption levels;
- it constantly measures the power-absorption levels of the electrical household appliance 100;
- it identifies, acquires, and decodes possible information sent by the electrical household appliance through variations of power absorption made by operations of the ON/OFF type on an electrical load 130 thereof in any of the modalities envisaged according to the invention; and
- it renders operative the contents of the information sent by the electrical household appliance and, in the case where there is a feedback to a request for modifying the power absorption by the energy manager 185, it transfers the information to the latter in such a way that this can use it to update its own strategy of management of the power absorbed by the entire domestic environment.

From the description above the characteristics of the present invention are clear, as well as its advantages. The proposed communication techniques are asynchronous with respect to the grid frequency and are based upon time intervals with variable duration, whose amplitude is decidedly greater than the grid period and hence capable to be managed also by means of simple electromechanical relays: this has the consequence that the proposed solution is simpler and cheaper that the prior art and usable also with electrical appliances having simplified control systems.

In fact, in the case of the instant invention, the information is independent from the grid period in both the types of transmission (from the electrical appliance to the control device and vice-versa) and varies preferably proportionally to the decimal value of the transmitted datum. In the case of the transmission from the electrical appliance to the control device, the transmitted datum is associated to the duration of activation (power absorption) of the electrical load used as a "transmitter", that can be in the order of some Watts (for example 3 Watt); the sequences of activations ON-OFF of the electrical load (that is, the operations of closing and opening of the contact 125) are referred to relatively long periods, i.e., with durations in the order of one second, and hence manageable in a simple way. In the case of the transmission from the control device to the electrical appliance, the transmitted datum is associated to the duration of the pause included between two very short mains interruption, whose duration is preferably the lowest one that can be managed with an electromechanical relay (i.e., in the order of 40-60 mS, knowing than the bounces of the contact of a relay ends typically within 20-30 mS) and such not to create disturbances to the supply of the control electronics associated to the electrical appliance, that usually can withstands mains interruptions in the order of some tenths of a second. Any risks of alteration of the waveform of the supply voltage and of generation of spurious harmonics are also avoided.

It is evident that numerous variations are possible for encoding information by acting on the switch 125 in ON-OFF mode, combining, for example, pulses both of fixed duration and of variable duration, without thereby departing from the sphere of protection of the present invention. Moreover, the six different meanings associated to Data1 (*feedback, status, event, statistic, diagnostic, type*) are only some important examples of the possible types of information that an electrical household appliance can communicate to the outside world by means of the method described above, it obviously being possible to send with the same method also other types of information deemed useful, without thereby departing from the scope of the present invention.

## Claims

1. An electrical household appliance system that comprises:
- an electrical appliance (100), having at least an electrical load (130) and a first digital control system (110), which comprises means (115, 120, 125) for managing flows of electric current of supply of the at least one electrical load (130), said means for managing (115, 120, 125) including a first controllable switch (125); and
- a control device (160; 191), which may be operatively set between an electrical supply line (150, 151) of the electrical appliance (100) and a corresponding a.c. electric voltage supply source, the control device (160; 191) having a second digital control system (165-167, 170, 171, 175) with a second controllable switch (171) designed to manage in ON-OFF mode the a.c. electric voltage from the supply source to the electrical appliance (100),
wherein at least one of the first digital control system (110) and second digital control system (165-167, 170, 171, 175) is prearranged for transmitting information (105) and at least another one of the first digital control system (110) and second digital control system (165-167, 170, 171, 175) is prearranged for receiving information (105),
wherein the first and second digital control systems (110; 165-167, 170, 171, 175) are prearranged for transmitting and/or receiving said information (105) through said electrical supply line (150, 151),
wherein:
- the first digital control system (110) is configured for encoding first information (105) via a sequence of actions of closing and opening of the first controllable switch (125) associated to periods of variable duration, the information to be transmitted being associated to the variable duration of said periods, and wherein the second digital control system (165-167, 170, 171, 175) includes means for receiving the first information (105), comprising means (165, 166, 167) for measuring variations of the electric current absorbed by the electrical appliance (100) and means (170) for decoding the first information;
**characterized in that**:
- the second digital control system (165-167, 170, 171, 175) is configured for encoding second information via a sequence of interruptions (SPF1, SPF2, SPF3) of fixed duration (A) of the supply a.c. voltage of the electrical appliance (100), which can be executed via the second controllable switch (171), said interruptions (SPF1, SPF2, SPF3) of fixed duration (A) being separated by a corresponding interval (Pause1, Pause2) of variable duration (B), the information to be transmitted being associated to the variable duration (B) of the interval (Pause1, Pause2), and the fixed duration (A) of the interruptions (SPF1, SPF2, SPF3) being such as not to perturb operation of the electrical appliance (100), and wherein the first digital control system (110) includes means for receiving the second information (105), comprising means for detecting said interruptions and means for decoding the second information.

2. The system according to Claim 1, wherein encoding of the first information (105) comprises a sequence of pulses of variable duration associated to passage of electric current on the at least one electrical load (130), interspersed by fixed pauses associated to opening of the first controllable switch (125).

3. The device according to Claim 1 or Claim 2, wherein encoding of the second information (105) comprises at least:
- a first interruption (SPF1) of the supply voltage of the electrical appliance (100);
- a first interval (Pause 1) wherein the variable duration (B) of the first interval (Pause 1) is associated to the information to be transmitted;
- a second interruption (SPF2) of the supply voltage of the electrical appliance (100), having the same duration (A) as the first interruption (SPF1);
- a second interval (Pause2), preferably having the same duration (B) as the first interval (Pause1); and
- a third interruption (SPF3) of the voltage of supply of the electrical appliance (100), having the same duration (A) as the first interruption (SPF1) and as the second interruption (SPF2).

4. The system according to Claim 2, wherein encoding of the first information includes at least:
- a first datum of start of transmission (header), represented by a pulse of current of a first duration, followed by a fixed pause;
- a second datum (Data1), indicating the type of information, represented by a pulse of current having a duration depending upon a first value to be transmitted, followed by a fixed pause;
- a third datum (Data2), indicating the contents of the information, represented by a pulse of current having a duration depending upon a second value to be transmitted, followed by a fixed pause; and preferably
- a fourth datum (Data3), which replicates the third datum and concludes the transmission.

5. The system according to Claim 3, wherein the interval, or each interval (Pause1, Pause2), comprises a predefined fraction of time divided into a plurality of equal sub-intervals of time, there corresponding to each sub-interval a respective type of information to be transmitted.

6. The system according to any one of the preceding claims, wherein:
- the fixed duration (A) of said interruptions (SPF1, SPF2, SPF3) is comprised between 40 and 60 ms; and/or
- the variable duration (B) of said intervals is comprised between 2000 and 3000 ms.

7. The system according to any one of the preceding claims, wherein the first information (105) comprise one or more information selected from among: type of electrical appliance, operating status of the electrical appliance, events of interaction of a user with the electrical appliance, statistical data on frequency and mode of use of the electrical appliance, diagnostic data generated by a system of self-diagnosis of the electrical appliance, feedback to requests of variation of consumption of electric power by the electrical appliance.

8. The system according to any one of the preceding claims, wherein the second information (105) comprises a request for variation of consumption of electric power by the electrical appliance.

9. The system according to Claim 8, wherein the second digital control system (165-167, 170, 171, 175) includes interface means (175) for interfacing to a communication network (180) and is prearranged for:
- communicating to the electrical appliance (100) a request for variation of its consumption of electric power; and
- receiving from the electrical appliance (100) a feedback to said request for variation of consumption of electric power, said feedback including in particular information on operating decisions taken by the first digital control system (110) while respecting the constraints proper to the operating step in which the electrical appliance itself is operating at the moment of said request for variation; and
- communicating said feedback on the communication network (180).

10. The system according to any one of the preceding claims, wherein the second digital control system (165-167, 170, 171, 175) includes means (175) for interfacing to a communication network (180) and is prearranged for:
- receiving information available on the communication network (180), such as requests for variation of consumption of electric power by the electrical appliance (100); and/or
- making available on the communication network (180) the first information (105).

11. The system according to Claims 9 and 10, further comprising a domestic-energy-management device (185) interfaced with the communication network (180), wherein:
the second digital control system (165-167, 170, 171, 175) is configured for receiving a request for variation of the absorption of electric power entered into the communication network (180) by the energy-management device (185) and for forwarding said request to the first digital control system (110);
the first digital control system (110) is configured for transmitting to the second digital control system (165-167, 170, 171, 175) a feedback to said request for variation of consumption of electric power, the feedback including information regarding operating decisions taken by the first digital control system (110); and
the second digital control system (165-167, 170, 171, 175) is moreover configured for communicating said information regarding operating decisions to the energy-management device (185), through the communication network (180).

12. The system according to any one of the preceding claims, wherein the control device (160; 191) has first connection means (152) for connection to said supply line (105, 151) of the electrical appliance (100) and second connection means (153; 154) for connection to said supply source.

13. The system according to Claim 12, wherein the control device is configured as movable device (160), which can be connected between a supply cable (150, 151) of the electrical appliance (100) and a current socket (190), or else is integrated in a smart socket (191).

14. A method of communication between an electrical appliance (100) and a corresponding control device (160; 191), comprising the steps of:
a) providing an electrical appliance (100), having at least one electrical load (130) and a first digital control system (110), which comprises means (115, 120, 125) for managing flows of electric current of supply of the at least one electrical load (130), said means for managing (115, 120, 125) including a first controllable switch (125);
b) providing a control device (160; 191), which may be operatively set between an electrical supply line (150, 151) of the electrical appliance (100) and a corresponding a.c. voltage supply source, the control device (160; 191) having a second digital control system (165-167, 170, 171, 175) with a second controllable switch (171), designed to manage the a.c. voltage from the supply source to the electrical appliance (100) in ON-OFF mode; and
c) transmitting information from the first digital control system (110) to the second digital control system (165-167, 170, 171, 175) and/or vice versa through said electrical supply line (150, 151);
wherein step c) comprises at least one of:
c1) a transmission from the first digital control system (110) to the second digital control system (165-167, 170, 171, 175) which includes encoding of information (105) obtained via a sequence of actions of closing and opening of the first controllable switch (125) associated to periods of variable duration, the information to be transmitted being associated to the variable duration of said periods,
c2) a transmission from the second digital control system (165-167, 170, 171, 175) to the first digital control system (110) which includes encoding of information obtained via a sequence of interruptions (SPF1, SPF2, SPF3) of fixed duration (A) of the a.c. voltage of supply of the electrical appliance (100), which can be executed via the second controllable switch (171), said interruptions (SPF1, SPF2, SPF3) of fixed duration (A) being separated by a corresponding interval (Pause1, Pause2) of variable duration (B), the information to be transmitted being associated to the variable duration (B) of the interval (Pausel, Pause2) and the fixed duration (A) of the interruptions (SPF1, SPF2, SPF3) being such as not to perturb operation of the electrical appliance (100)
d) receiving and decoding the transmitted information by the first and the second digital control systems.

15. An electrical appliance (100), in particular for use in an electrical household appliance system according to one or more of Claims 1-13, having at least one electrical load (130) and a digital control system (110), which comprises means (115, 120, 125) for managing flows of electric current of supply of the at least one electrical load (130), said means for managing (115, 120, 125) including a first controllable switch (125), wherein the digital control system (110) of the electrical appliance (100) is prearranged for communicating with an external control device (160; 191) byway of an electrical supply line (150, 151) of its own,
wherein the digital control system (110) is configured for:
- transmitting information (105) via a sequence of actions of closing and opening of the first controllable switch (125) associated to periods of variable duration, the information to be transmitted being associated to the variable duration of said periods,
- receiving and decoding information (105) transmitted by the external control device (160; 191) in the form of a sequence of interruptions (SPF1, SPF2, SPF3) of fixed duration (A) of the a.c. voltage of supply of the electrical appliance (100), two interruptions (SPF1, SPF2, SPF3) of fixed duration (A) being separated by a corresponding interval (Pause1, Pause2) of variable duration (B), the information to be received being associated to the variable duration (B) of the interval (Pausel, Pause2) and the fixed duration (A) of the interruptions (SPF1, SPF2, SPF3) being such as not to perturb operation of the electrical appliance (100).

16. A control device for an electrical appliance, prearranged to be operatively set between an electrical supply line (150, 151) of the electrical appliance (100) and a corresponding a.c. voltage supply source, the control device (160; 191) having a digital control system (165-167, 170, 171, 175) that comprises transmission means (170, 171) capable of encoding information via controlled interruptions of the a.c. voltage of supply of the electric user (100), the transmission means (170, 171) comprising a first controllable switch (171), capable of managing in an ON-OFF mode the a.c. voltage from the supply source to the electrical appliance (100),
wherein the transmission means (170, 171) are prearranged for carrying out a coding of information by means of sequences of interruptions (SPF1, SPF2, SPF3) having fixed duration (A) of the a.c. voltage of supply of the electrical appliance (100), said interruptions (SPF1, SPF2, SPF3) having fixed duration (A) being separated by a corresponding interval (Pausel, Pause2) having variable duration (B), wherein the information to be transmitted is associated to the variable duration (B) of the interval (Pausel, Pause2) and the fixed duration (A) of the interruptions (SPF1, SPF2, SPF3) is such as not to perturb operation of the electrical appliance (100)
the digital control system further comprises means for receiving and decoding said information.

## Patentansprüche

1. Elektrisches Haushaltsgerätesystem, das umfasst:
- ein elektrisches Gerät (100) mit mindestens einer elektrischen Last (130) und einem ersten digitalen Steuersystem (110), das Mittel (115, 120, 125) zum Verwalten von Strömen elektrischen Versorgungsstroms der mindestens einen elektrischen Last (130) umfasst, wobei die Mittel zum Verwalten (115, 120, 125) einen ersten steuerbaren Schalter (125) beinhalten; und
- eine Steuervorrichtung (160; 191), die betriebsbereit zwischen einer elektrischen Versorgungsleitung (150, 151) des elektrischen Geräts (100) und einer entsprechenden elektrischen Wechselspannungsversorgungsquelle eingestellt werden kann, wobei die Steuervorrichtung (160; 191) ein zweites digitales Steuersystem (165-167, 170, 171, 175) mit einem zweiten steuerbaren Schalter (171) aufweist, das gestaltet ist, die elektrische Wechselspannung von der Versorgungsquelle zu dem elektrischen Gerät (100) im EIN-AUS-Modus zu verwalten,
wobei mindestens eines von dem ersten digitalen Steuersystem (110) und dem zweiten digitalen Steuersystem (165-167, 170, 171, 175) zum Übertragen von Informationen (105) vorab festgelegt ist und mindestens ein anderes von dem ersten digitalen Steuersystem (110) und dem zweiten digitalen Steuersystem (165-167, 170, 171, 175) zum Empfangen von Informationen (105) vorab festgelegt ist,
wobei das erste und zweite digitale Steuersystem (110; 165-167, 170, 171, 175) zum Übertragen und/oder Empfangen der Informationen (105) durch die elektrische Versorgungsleitung (150, 151) vorab festgelegt sind,
wobei:
- das erste digitale Steuersystem (110) konfiguriert ist, erste Informationen (105) über eine Abfolge von Handlungen zum Schließen und Öffnen des ersten steuerbaren Schalters (125) zu codieren, die mit Perioden variabler Dauer verknüpft sind, wobei die zu übertragenden Informationen mit der variablen Dauer der Perioden verknüpft sind und wobei das zweite digitale Steuersystem (165-167, 170, 171, 175) Mittel zum Empfangen der ersten Informationen (105), Mittel (165, 166, 167) zum Messen von Variationen des elektrischen Stroms, der von dem elektrischen Gerät (100) absorbiert wird, und Mittel (170) zum Decodieren der ersten Informationen beinhaltet;
**dadurch gekennzeichnet, dass**:
- das zweite digitale Steuersystem (165-167, 170, 171, 175) konfiguriert ist, zweite Informationen über eine Abfolge von Unterbrechungen (SPF1, SPF2, SPF3) einer festgesetzten Dauer (A) der Versorgungswechselspannung des elektrischen Geräts (100) zu codieren, die über den zweiten steuerbaren Schalter (171) ausgeführt werden können, wobei die Unterbrechungen (SPF1, SPF2, SPF3) einer festgesetzten Dauer (A) durch ein entsprechendes Intervall (Pausel, Pause2) variabler Dauer (B) getrennt sind, wobei die zu übertragenden Informationen mit der variablen Dauer (B) des Intervalls (Pausel, Pause2) verknüpft sind und die festgesetzte Dauer (A) der Unterbrechungen (SPF1, SPF2, SPF3) derart ist, dass Betrieb des elektrischen Geräts (100) nicht gestört wird, und wobei das erste digitale Steuersystem (110) Mittel zum Empfangen der zweiten Informationen (105) beinhaltet, die Mittel zum Erfassen der Unterbrechungen und Mittel zum Decodieren der zweiten Informationen umfassen.

2. System nach Anspruch 1, wobei Codieren der ersten Informationen (105) eine Abfolge von Pulsen variabler Dauer umfasst, die mit Durchgang von elektrischem Strom auf der mindestens einen elektrischen Last (130) verknüpft sind, durchsetzt von festgesetzten Pausen, die mit Öffnen des ersten steuerbaren Schalters (125) verknüpft sind.

3. Vorrichtung nach Anspruch 1 oder Anspruch 2, wobei Codieren der zweiten Informationen (105) mindestens umfasst:
- eine erste Unterbrechung (SPF1) der Versorgungsspannung des elektrischen Geräts (100);
- ein erstes Intervall (Pause 1), wobei die variable Dauer (B) des ersten Intervalls (Pause1) mit den zu übertragenden Informationen verknüpft ist;
- eine zweite Unterbrechung (SPF2) der Versorgungsspannung des elektrischen Geräts (100) mit derselben Dauer (A) wie die erste Unterbrechung (SPF1);
- ein zweites Intervall (Pause2), bevorzugt mit derselben Dauer (B) wie das erste Intervall (Pause1); und
- eine dritte Unterbrechung (SPF3) der Versorgungsspannung des elektrischen Geräts (100) mit derselben Dauer (A) wie die erste Unterbrechung (SPF1) und wie die zweite Unterbrechung (SPF2).

4. System nach Anspruch 2, wobei Codieren der ersten Informationen mindestens beinhaltet:
- ein erstes Datum eines Übertragungsstarts (Header), dargestellt durch einen Strompuls einer ersten Dauer, gefolgt von einer festgesetzten Pause;
- ein zweites Datum (Data1), das die Art von Informationen angibt, dargestellt durch einen Strompuls mit einer Dauer, die von einem ersten zu übertragenden Wert abhängig ist, gefolgt von einer festgesetzten Pause
- ein drittes Datum (Data2), das den Inhalt der Informationen angibt, dargestellt durch einen Strompuls mit einer Dauer, die von einem zweiten zu übertragenden Wert abhängig ist, gefolgt von einer festgesetzten Pause; und bevorzugt
- ein viertes Datum (Data3), das das dritte Datum repliziert und die Übertragung abschließt.

5. System nach Anspruch 3, wobei das Intervall oder jedes Intervall (Pausel, Pause2) einen vordefinierten Bruchteil an Zeit dividiert in eine Vielzahl von gleichen Zeitteilintervallen umfasst, die jedem Teilintervall einer entsprechenden zu übertragenden Art von Information entsprechen.

6. System nach einem der vorstehenden Ansprüche, wobei:
- die festgesetzte Dauer (A) der Unterbrechungen (SPF1, SPF2, SPF3) zwischen 40 und 60 ms ist; und/oder
- die variable Dauer (B) der Intervalle zwischen 2000 und 3000 ms ist.

7. System nach einem der vorstehenden Ansprüche, wobei die ersten Informationen (105) eine oder mehrere Informationen umfassen, ausgewählt aus: Art von elektrischem Gerät, Betriebszustand des elektrischen Geräts, Ereignisse einer Interaktion eines Benutzers mit dem elektrischen Gerät, statistische Daten zu Häufigkeit und Art einer Verwendung des elektrischen Geräts, diagnostische Daten, die von einem System zur Selbstdiagnose des elektrischen Geräts erzeugt werden, Rückmeldung zu Anfragen nach Variation eines Verbrauchs von elektrischer Leistung durch das elektrische Gerät.

8. System nach einem der vorstehenden Ansprüche, wobei die zweiten Informationen (105) eine Anfrage nach Variation eines Verbrauchs von elektrischer Leistung durch das elektrische Gerät umfassen.

9. System nach Anspruch 8, wobei das zweite digitale Steuersystem (165-167, 170, 171, 175) Schnittstellenmittel (175) zum Koppeln an ein Kommunikationsnetzwerk (180) beinhaltet und vorab festgelegt ist zum:
- Kommunizieren an das elektrische Gerät (100) einer Anfrage nach Variation seines Verbrauchs von elektrischer Leistung; und
- Empfangen von dem elektrischen Gerät (100) einer Rückmeldung zu der Anfrage nach Variation eines Verbrauchs von elektrischer Leistung, wobei die Rückmeldung insbesondere Informationen über Betriebsentscheidungen beinhaltet, die das erste digitale Steuersystem (110) trifft, während die Einschränkungen, die für den Betriebsschritt maßgeblich sind, in dem das elektrische Gerät selbst zum Zeitpunkt der Anfrage nach Variation arbeitet, berücksichtigt werden; und
- Kommunizieren der Rückmeldung zu dem Kommunikationsnetzwerk (180).

10. System nach einem der vorstehenden Ansprüche, wobei das zweite digitale Steuersystem (165-167, 170, 171, 175) Mittel (175) zum Koppeln an ein Kommunikationsnetzwerk (180) beinhaltet und vorab festgelegt ist zum:
- Empfangen von Informationen, die auf dem Kommunikationsnetzwerk (180) verfügbar sind, wie Anfragen nach Variation eines Verbrauchs von elektrischer Leistung durch das elektrische Gerät (100); und/oder
- Verfügbarmachen der ersten Informationen (105) auf dem Kommunikationsnetzwerk (180).

11. System nach Anspruch 9 und 10, weiter umfassend eine Hausenergieverwaltungsvorrichtung (185), die mit dem Kommunikationsnetzwerk (180) gekoppelt ist; wobei:
das zweite digitale Steuersystem (165-167, 170, 171, 175) konfiguriert ist, eine Anfrage nach Variation der Absorption von elektrischer Leistung zu empfangen, die von der Energieverwaltungsvorrichtung (185) in das Kommunikationsnetzwerk (180) eingegeben wird, und die Anfrage an das erste digitale Steuersystem (110) weiterzuleiten;
das erste digitale Steuersystem (110) konfiguriert ist, eine Rückmeldung zu der Anfrage nach Variation von Verbrauch von elektrischer Leistung an das zweite digitale Steuersystem (165-167, 170, 171, 175) zu übertragen, wobei die Rückmeldung Informationen bezüglich Betriebsentscheidungen beinhaltet, die von dem ersten digitalen Steuersystem (110) getroffen werden; und
das zweite digitale Steuersystem (165-167, 170, 171, 175) überdies konfiguriert ist, die Informationen bezüglich Betriebsentscheidungen durch das Kommunikationsnetzwerk (180) an das Energieverwaltungsvorrichtung (185) zu kommunizieren.

12. System nach einem der vorstehenden Ansprüche, wobei die Steuervorrichtung (160; 191) erste Verbindungsmittel (152) zum Verbinden mit der Versorgungsleitung (105, 151) des elektrischen Geräts (100) und zweite Verbindungsmittel (153; 154) zum Verbinden mit der Versorgungsquelle aufweist.

13. System nach Anspruch 12, wobei die Steuervorrichtung als bewegliche Vorrichtung (160) konfiguriert ist, die zwischen einem Versorgungskabel (150, 151) des elektrischen Geräts (100) und einer Strombuchse (190) verbunden werden kann oder sonst in einer intelligenten Buchse (191) integriert ist.

14. Verfahren zur Kommunikation zwischen einem elektrischen Gerät (100) und einer entsprechenden Steuervorrichtung (160; 191), umfassend die Schritte:
a) Bereitstellen eines elektrischen Geräts (100) mit mindestens einer elektrischen Last (130) und einem ersten digitalen Steuersystem (110), das Mittel (115, 120, 125) zum Verwalten von Strömen elektrischen Versorgungsstroms der mindestens einen elektrischen Last (130) umfasst, wobei die Mittel zum Verwalten (115, 120, 125) einen ersten steuerbaren Schalter (125) beinhalten; und
b) Bereitstellen einer Steuervorrichtung (160; 191), die betriebsbereit zwischen einer elektrischen Versorgungsleitung (150, 151) des elektrischen Geräts (100) und einer entsprechenden elektrischen Wechselspannungsversorgungsquelle eingestellt werden kann, wobei die Steuervorrichtung (160; 191) ein zweites digitales Steuersystem (165-167, 170, 171, 175) mit einem zweiten steuerbaren Schalter (171) aufweist, das gestaltet ist, die elektrische Wechselspannung von der Versorgungsquelle zu dem elektrischen Gerät (100) im EIN-AUS-Modus zu verwalten; und
c) Übertragen von Informationen von dem ersten digitalen Steuersystem (110) zu dem zweiten digitalen Steuersystem (165-167, 170, 171, 175) und/oder umgekehrt durch die elektrische Versorgungsleitung (150, 151);
wobei Schritt c) mindestens eines umfasst von:
c1) eine Übertragung von dem ersten digitalen Steuersystem (110) zu dem zweiten digitalen Steuersystem (165-167, 170, 171, 175), die Codieren von Informationen (105) beinhaltet, die über eine Abfolge von Handlungen zum Schließen und Öffnen des ersten steuerbaren Schalters (125) erhalten werden, die mit Perioden variabler Dauer verknüpft sind, wobei die zu übertragenden Informationen mit der variablen Dauer der Perioden verknüpft sind,
c2) eine Übertragung von dem zweiten digitalen Steuersystem (165-167, 170, 171, 175) an das erste digitale Steuersystem (110), die Codieren von Informationen beinhaltet, die über eine Abfolge von Unterbrechungen (SPF1, SPF2, SPF3) einer festgesetzten Dauer (A) der Versorgungswechselspannung des elektrischen Geräts (100) erhalten werden, die über den zweiten steuerbaren Schalter (171) ausgeführt werden können, wobei die Unterbrechungen (SPF1, SPF2, SPF3) einer festgesetzten Dauer (A) durch ein entsprechendes Intervall (Pausel, Pause2) variabler Dauer (B) getrennt sind, wobei die zu übertragenden Informationen mit der variablen Dauer (B) des Intervalls (Pausel, Pause2) verknüpft sind und die festgesetzte Dauer (A) der Unterbrechungen (SPF1, SPF2, SPF3) derart ist, dass Betrieb des elektrischen Geräts (100) nicht gestört wird,
d) Empfangen und Decodieren der übertragenen Informationen durch das erste und das zweite digitale Steuersystem.

15. Elektrisches Gerät (100), insbesondere zur Verwendung in einem elektrischen Haushaltsgerätesystem nach einem oder mehreren der Ansprüche 1-13, mit mindestens einer elektrischen Last (130) und einem digitalen Steuersystem (110), das Mittel (115, 120, 125) zum Verwalten von Strömen elektrischen Versorgungsstroms der mindestens einen elektrischen Last (130) umfasst, wobei die Mittel zum Verwalten (115, 120, 125) einen ersten steuerbaren Schalter (125) beinhalten, wobei das digitale Steuersystem (110 des elektrischen Geräts (100) zum Kommunizieren mit einer externen Steuervorrichtung (160; 191) durch eine eigene elektrische Versorgungsleitung (150, 151) vorab festgelegt ist,
wobei das digitale Steuersystem (110) konfiguriert ist zum:
- Übertragen von Informationen (105) über eine Abfolge von Handlungen zum Schließen und Öffnen des ersten steuerbaren Schalters (125), die mit Perioden variabler Dauer verknüpft sind, wobei die zu übertragenden Informationen mit der variablen Dauer der Perioden verknüpft sind,
- Empfangen und Decodieren von Informationen (105), die von der externen Steuervorrichtung (160; 191) in der Form einer Abfolge von Unterbrechungen (SPF1, SPF2, SPF3) einer festgesetzten Dauer (A) der Versorgungswechselspannung des elektrischen Geräts (100) übertragen werden, wobei zwei Unterbrechungen (SPF1, SPF2, SPF3) einer festgesetzten Dauer (A) durch ein entsprechendes Intervall (Pausel, Pause2) variabler Dauer (B) getrennt sind, wobei die zu empfangenden Informationen mit der variablen Dauer (B) des Intervalls (Pausel, Pause2) verknüpft sind und die festgesetzte Dauer (A) der Unterbrechungen (SPF1, SPF2, SPF3) derart ist, dass Betrieb des elektrischen Geräts (100) nicht gestört wird.

16. Steuervorrichtung für ein elektrisches Gerät, die vorab festgelegt ist, betriebsbereit zwischen einer elektrischen Versorgungsleitung (150, 151) des elektrischen Geräts (100) und einer entsprechenden Wechselspannungsversorgungsquelle eingestellt zu sein, wobei die Steuervorrichtung (160; 191) ein digitales Steuersystem (165-167, 170, 171, 175) aufweist, das Übertragungsmittel (170, 171) umfasst, die imstande sind, Informationen über gesteuerte Unterbrechungen der Wechselspannungsversorgung des elektrischen Benutzers (100) zu codieren, wobei die Übertragungsmittel (170, 171) einen ersten steuerbaren Schalter (171) umfassen, der imstande ist, die Wechselspannung von der Versorgungsquelle zu dem elektrischen Gerät (100) in einem EIN-AUS-Modus zu verwalten,
wobei die Übertragungsmittel (170, 171) vorab festgelegt sind, eine Codierung von Informationen über Abfolgen von Unterbrechungen (SPF1, SPF2, SPF3) einer festgesetzten Dauer (A) der Versorgungswechselspannung des elektrischen Geräts (100) auszuführen, wobei die Unterbrechungen (SPF1, SPF2, SPF3) einer festgesetzten Dauer (A) durch ein entsprechendes Intervall (Pausel, Pause2) variabler Dauer (B) getrennt sind, wobei die zu übertragenden Informationen mit der variablen Dauer (B) des Intervalls (Pausel, Pause2) verknüpft sind und die festgesetzte Dauer (A) der Unterbrechungen (SPF1, SPF2, SPF3) derart ist, dass Betrieb des elektrischen Geräts (100) nicht gestört wird,
wobei das digitale Steuersystem weiter Mittel zum Empfangen und Decodieren der Informationen umfasst.

## Revendications

1. Système d'appareil électroménager qui comprend :
- un appareil électrique (100), présentant au moins une charge électrique (130) et un premier système de commande numérique (110), qui comprend des moyens (115, 120, 125) de gestion de circulations de courant électrique d'alimentation de la au moins une charge électrique (130), lesdits moyens de gestion (115, 120, 125) incluant un premier commutateur commandable (125) ; et
- un système de commande (160 ; 191), qui peut être placé de manière fonctionnelle entre une ligne d'alimentation électrique (150, 151) de l'appareil électrique (100) et une source d'alimentation en tension électrique en courant alternatif correspondante, le dispositif de commande (160 ; 191) présentant un second système de commande numérique (165-167, 170, 171, 175) avec un second commutateur commandable (171) conçu pour gérer, en mode MARCHE-ARRÊT, la tension électrique en courant alternatif depuis la source d'alimentation jusqu'à l'appareil électrique (100),
dans lequel au moins un du premier système de commande numérique (110) et du second système de commande numérique (165-167, 170, 171, 175) est pré-agencé pour transmettre des informations (105) et au moins un autre du premier système de commande numérique (110) et du second système de commande numérique (165-167, 170, 171, 175) est pré-agencé pour recevoir des informations (105),
dans lequel les premier et second systèmes de commande numérique (110 ; 165-167, 170, 171, 175) sont pré-agencés pour transmettre et/ou recevoir lesdites informations (105) par l'intermédiaire de ladite ligne d'alimentation électrique (150,151),
dans lequel :
- le premier système de commande numérique (110) est configuré pour coder des premières informations (105) par l'intermédiaire d'une séquence d'actions de fermeture et d'ouverture du premier commutateur commandable (125) associées à des périodes de durée variable, les informations à transmettre étant associées à la durée variable desdites périodes, et dans lequel le second système de commande numérique (165-167, 170, 171, 175) inclut des moyens de réception des premières informatiques (105), comprenant des moyens (165, 166, 167) de mesurer des variations du courant électrique absorbé par l'appareil électrique (100) et des moyens (170) de décoder les premières informations ;
**caractérisé en ce que** :
- le second système de commande numérique (165-167, 170, 171, 175) est configuré pour coder des secondes informations par l'intermédiaire d'une séquence d'interruptions (SPF1, SPF2, SPF3) de durée fixe (A) de la tension en courant alternatif d'alimentation de l'appareil électrique (100), qui peuvent être exécutées par l'intermédiaire du second commutateur commandable (171), lesdites interruptions (SPF1, SPF2, SPF3) de durée fixe (A) étant séparées par un intervalle correspondant (Pausel, Pause2) de durée variable (B), les informations à transmettre étant associées à la durée variable (B) de l'intervalle (Pausel, Pause2), et la durée fixe (A) des interruptions (SPF1, SPF2, SPF3) étant telle à ne pas perturber le fonctionnement de l'appareil électrique (100), et dans lequel le premier système de commande numérique (110) inclut des moyens de réception des secondes informations (105), comprenant des moyens de détection desdites interruptions et des moyens de décodage des secondes informations.

2. Système selon la revendication 1, dans lequel le codage des premières informations (105) comprend une séquence d'impulsions de durée variable associées au passage de courant électrique sur la au moins une charge électrique (130), entrecoupées par des pauses fixes associées à l'ouverture du premier commutateur commandable (125).

3. Dispositif selon la revendication 1 ou la revendication 2, dans lequel le codage des secondes informations (105) comprend au moins :
- une première interruption (SPF1) de la tension d'alimentation de l'appareil électrique (100) ;
- un premier intervalle (Pausel) dans lequel la durée variable (B) du premier intervalle (Pausel) est associée aux informations à transmettre ;
- une deuxième interruption (SPF2) de la tension d'alimentation de l'appareil électrique (100), présentant la même durée (A) que la première interruption (SPF1) ;
- un second intervalle (Pause2), de préférence présentant la même durée (B) que le premier intervalle (Pausel) ; et
- une troisième interruption (SPF3) de la tension d'alimentation de l'appareil électrique (100), présentant la même durée (A) que la première interruption (SPF1) et que la deuxième interruption (SPF2).

4. Système selon la revendication 2, dans lequel le codage des premières informations inclut au moins :
- une première donnée de commencement de transmission (en-tête), représentée par une impulsion de courant d'une première durée, suivie par une pause fixe ;
- une deuxième donnée (Data1), indiquant le type d'informations, représentée par une impulsion de courant présentant une durée dépendant d'une première valeur à transmettre, suivie par une pause fixe ;
- une troisième donnée (Data2), indiquant les contenus des informations, représentée par une impulsion de courant présentant une durée dépendant d'une seconde valeur à transmettre, suivie par une pause fixe ; et de préférence
- une quatrième donnée (Data3), qui reproduit la troisième donnée et conclut la transmission.

5. Système selon la revendication 3, dans lequel l'intervalle, ou chaque intervalle (Pausel, Pause2), comprend une fraction prédéfinie de temps divisé en une pluralité de sous-intervalles égaux de temps, correspondant à chaque sous-intervalle un type respectif d'informations à transmettre.

6. Système selon l'une quelconque des revendications précédentes, dans lequel :
- la durée fixe (A) desdites interruptions (SPF1, SPF2, SPF3) est comprise entre 40 et 60 ms ; et/ou
- la durée variable (B) desdits intervalles est comprise entre 2 000 et 3 000 ms.

7. Système selon l'une quelconque des revendications précédentes, dans lequel les premières informations (105) comprennent une ou plusieurs informations sélectionnées parmi : le type d'appareil électrique, le statut de fonctionnement de l'appareil électrique, les événements d'interaction d'un utilisateur avec l'appareil électrique, des données statistiques sur la fréquence et le mode d'utilisation de l'appareil électrique, des données de diagnostic générées par un système d'autodiagnostic de l'appareil électrique, un retour sur des demandes de variation de consommation d'électricité par l'appareil électrique.

8. Système selon l'une quelconque des revendications précédentes, dans lequel les secondes informations (105) comprennent une demande de variation de consommation d'électricité par l'appareil électrique.

9. Système selon la revendication 8, dans lequel le second système de commande numérique (165-167, 170, 171, 175) inclut un moyen d'interface (175) pour se relier à un réseau de communication (180) et est pré-agencé pour :
- communiquer à l'appareil électrique (100) une demande de variation de sa consommation d'électricité ; et
- recevoir de l'appareil électrique (100) un retour sur ladite demande de variation de consommation d'électricité, ledit retour incluant en particulier des informations sur des décisions de fonctionnement prises par le premier système de commande numérique (110) tout en respectant les contraintes propres à l'étape de fonctionnement dans laquelle l'appareil électrique lui-même fonctionne au moment de ladite demande de variation ; et
- communiquer ledit retour sur le réseau de communication (180).

10. Système selon l'une quelconque des revendications précédentes, dans lequel le second système de commande numérique (165-167, 170, 171, 175) inclut un moyen (175) de se relier à un réseau de communication (180) et est pré-agencé pour :
- recevoir des informations disponibles sur le réseau de communication (180), telles que des demandes de variation de consommation d'électricité par l'appareil électrique (100) ; et/ou
- rendre les premières informations (105) disponibles sur le réseau de communication (180).

11. Système selon les revendications 9 et 10, comprenant en outre un dispositif de gestion d'énergie domestique (185) relié au réseau de communication (180), dans lequel :
le second système de commande numérique (165-167, 170, 171, 175) est configuré pour recevoir une demande de variation de l'absorption d'électricité entrée dans le réseau de communication (180) par le dispositif de gestion d'énergie (185) et pour transmettre ladite demande au premier système de commande numérique (110) ;
le premier système de commande numérique (110) est configuré pour transmettre au second système de commande numérique (165-167, 170, 171, 175) un retour sur ladite demande de variation de consommation d'électricité, le retour incluant des informations concernant des décisions de fonctionnement prises par le premier système de commande numérique (110) ; et
le second système de commande numérique (165-167, 170, 171, 175) est en outre configuré pour communiquer lesdites informations concernant des décisions de fonctionnement au dispositif de gestion d'énergie (185), à travers le réseau de communication (180).

12. Système selon l'une quelconque des revendications précédentes, dans lequel le dispositif de commande (160 ; 191) présente un premier moyen de raccordement (152) pour un raccordement à ladite ligne d'alimentation (105, 151) de l'appareil électrique (100) et un second moyen de raccordement (153 ; 154) pour un raccordement à ladite source d'alimentation.

13. Système selon la revendication 12, dans lequel le dispositif de commande est configuré en tant que dispositif mobile (160), qui peut être raccordé entre un câble d'alimentation (150, 151) de l'appareil électrique (100) et une prise de courant (190), ou bien est intégré dans une prise intelligente (191).

14. Procédé de communication entre un appareil électrique (100) et un dispositif de commande correspondant (160 ; 191), comprenant les étapes consistant à :
a) fournir un appareil électrique (100), présentant au moins une charge électrique (130) et un premier système de commande numérique (110), qui comprend des moyens (115, 120, 125) de gestion de circulations de courant électrique d'alimentation de la au moins une charge électrique (130), lesdits moyens de gestion (115, 120, 125) incluant un premier commutateur commandable (125) ;
b) fournir un dispositif de commande (160 ; 191), qui peut être placé de manière fonctionnelle entre une ligne d'alimentation électrique (150, 151) de l'appareil électrique (100) et une source d'alimentation en tension en courant alternatif correspondante, le dispositif de commande (160 ; 191) présentant un second système de commande numérique (165-167, 170, 171, 175) avec un second commutateur commandable (171), conçu pour gérer la tension en courant alternatif depuis la source d'alimentation jusqu'à l'appareil électrique (100) en mode MARCHE-ARRÊT; et
c) transmettre des informations à partir du premier système de commande numérique (110) jusqu'au second système de commande numérique (165-167, 170, 171, 175) et/ou vice versa par l'intermédiaire de ladite ligne d'alimentation électrique (150, 151) ;
dans lequel l'étape c) comprend au moins une parmi :
c1) une transmission à partir du premier système de commande numérique (110) jusqu'au second système de commande numérique (165-167, 170, 171, 175) qui inclut le codage d'informations (105) obtenues par l'intermédiaire d'une séquence d'actions de fermeture et d'ouverture du premier commutateur commandable (125) associées à des périodes de durée variable, les informations à transmettre étant associées à la durée variable desdites périodes,
c2) une transmission à partir du second système de commande numérique (165-167, 170, 171, 175) jusqu'au premier système de commande numérique (110) qui inclut le codage d'informations obtenues par l'intermédiaire d'une séquence d'interruptions (SPF1, SPF2, SPF3) de durée fixe (A) de la tension en courant alternatif d'alimentation de l'appareil électrique (100), qui peuvent être exécutées par l'intermédiaire du second commutateur commandable (171), lesdites interruptions (SPF1, SPF2, SPF3) de durée fixe (A) étant séparées par un intervalle correspondant (Pausel, Pause2) de durée variable (B), les informations à transmettre étant associées à la durée variable (B) de l'intervalle (Pausel, Pause2), et la durée fixe (A) des interruptions (SPF1, SPF2, SPF3) étant telle à ne pas perturber le fonctionnement de l'appareil électrique (100),
d) recevoir et décoder les informations transmises par les premier et second systèmes de commande numérique.

15. Appareil électrique (100), en particulier pour une utilisation dans un système d'appareil électroménager selon une ou plusieurs des revendications 1-13, présentant au moins une charge électrique (130) et un système de commande numérique (110), qui comprend des moyens (115, 120, 125) de gestion de circulations de courant électrique d'alimentation de la au moins une charge électrique (130), lesdits moyens de gestion (115, 120, 125) incluant un premier commutateur commandable (125), dans lequel le système de commande numérique (110) de l'appareil électrique (100) est pré-agencé pour communiquer avec un dispositif de commande externe (160 ; 191) à l'aide d'une ligne d'alimentation électrique (150, 151) qui lui est propre,
dans lequel le système de commande numérique (110) est configuré pour :
- transmettre des informations (105) par l'intermédiaire d'une séquence d'actions de fermeture et d'ouverture du premier commutateur commandable (125) associées à des périodes de durée variable, les informations à transmettre étant associées à la durée variable desdites périodes,
- recevoir et décoder des informations (105) transmises par le dispositif de commande externe (160 ; 191) sous la forme d'une séquence d'interruptions (SPF1, SPF2, SPF3) de durée fixe (A) de la tension en courant alternatif d'alimentation de l'appareil électrique (100), deux interruptions (SPF1, SPF2, SPF3) de durée fixe (A) étant séparées par un intervalle correspondant (Pausel, Pause2) de durée variable (B), les informations à recevoir étant associées à la durée variable (B) de l'intervalle (Pausel, Pause2), et la durée fixe (A) des interruptions (SPF1, SPF2, SPF3) étant telle à ne pas perturber le fonctionnement de l'appareil électrique (100).

16. Dispositif de commande pour un appareil électrique, pré-agencé pour être placé de manière fonctionnelle entre une ligne d'alimentation électrique (150, 151) de l'appareil électrique (100) et une source d'alimentation en tension en courant alternatif correspondante, le dispositif de commande (160 ; 191) présentant un système de commande numérique (165-167, 170, 171, 175) qui comprend des moyens de transmission (170, 171) capables de coder des informations par l'intermédiaire d'interruptions commandées de la tension en courant alternatif d'alimentation de l'utilisateur électrique (100), les moyens de transmission (170, 171) comprenant un premier commutateur commandable (171), capable de gérer, en mode MARCHE-ARRÊT, la tension en courant alternatif depuis la source d'alimentation jusqu'à l'appareil électrique (100),
dans lequel les moyens de transmission (170, 171) sont pré-agencés pour effectuer un codage d'informations au moyen de séquences d'interruptions (SPF1, SPF2, SPF3) présentant une durée fixe (A) de la tension en courant alternatif d'alimentation de l'appareil électrique (100), lesdites interruptions (SPF1, SPF2, SPF3) présentant une durée fixe (A) étant séparées par un intervalle correspondant (Pausel, Pause2) présentant une durée variable (B), dans lequel les informations à transmettre sont associées à la durée variable (B) de l'intervalle (Pausel, Pause2), et la durée fixe (A) des interruptions (SPF1, SPF2, SPF3) est telle à ne pas perturber le fonctionnement de l'appareil électrique (100),
le système de commande numérique comprend en outre des moyens de réception et de décodage desdites informations.
